# EUROPÄISCHE PATENTANMELDUNG

(11) **EP 2 457 849 A1**
(43) Veröffentlichungstag der Anmeldung: **30.05.2012**
(21) Anmeldenummer: 11179137.2
(22) Anmeldetag: 29.08.2011
(51) Int. Cl.: B65D 85/30, B65D 6/10, B29C 65/20

(54) **Modular aufgebauter Flaschenkasten aus Kunststoff**

(30) Priorität: 25.11.2010 DE 102010060810
(71) Anmelder: Schoeller Arca Systems GmbH, 19057 Schwerin (DE)
(72) Erfinder: Huizingh, John, 9541 AH Vlagtwedde (NL)
(74) Vertreter: Winter, Brandl, Fürniss, Hübner, Röss, Kaiser, Polte - Partnerschaft

(57) **Zusammenfassung**

Beschrieben ist ein Flaschenkasten (2) aus Kunststoff zur Lagerung und zum Transport von Flaschen, mit einem Boden (8, 46) und einer im Wesentlichen senkrecht um diesen herum ausgebildeten Seitenwandung (10, 48), wobei eine einstückig ausgebildete innere Komponente (6) in eine einstückig ausgebildete äußere Komponente (4) einführbar und an Fügeflächen (34, 36, 38, 40, 42, 66, 72, 76, 77) mit dieser stoffschlüssig verbindbar ist. Dabei sind zumindest ausgewählte und einander entsprechende Fügeflächen (34, 66) an Seitenwandungsabschnitten (12, 14, 50, 52) der inneren Komponente (6) und der äußeren Komponente (4) in Einführrichtung (R) der inneren Komponente (6) nach innen angestellt.

## Beschreibung

Die Erfindung betrifft einen modular aufgebauten Flaschenkasten gemäß dem Oberbegriff des Anspruchs 1 sowie dessen innere und äußere Komponente gemäß dem Oberbegriff der Ansprüche 10 bzw. 11.

Aus dem Stand der Technik sind diverse Aufbauten von Flaschenkästen aus Kunststoff bekannt. Es hat sich insbesondere als vorteilhaft herausgestellt, solche Flaschenkästen modular aufzubauen und deren Komponenten unabhängig voneinander herzustellen, da die einzelnen Komponenten eines Flaschenkastens unterschiedlichen Anforderungen gerecht werden müssen. So können bei der Gestaltung der Innenkomponente vorrangig Kriterien wie Festigkeit, Steifigkeit, Lastabtragevermögen, Bruchsicherheit etc. berücksichtigt werden, während bei der Außenkomponente neben Kriterien wie Schlagzähigkeit vor allem ästhetische Gestaltungsmöglichkeiten zu berücksichtigen sind. Einen Flaschenkasten, der all diesen Anforderungen gerecht wird, in einem integrierten Verfahren mit mehreren unterschiedlichen Materialien und Farben herzustellen, ist mit hohem vorrichtungstechnischen Aufwand verbunden, so dass die Herstellungskosten bei einer separaten Herstellung der einzelnen Komponenten wesentlich kostengünstiger sind. Wenn jedoch die Einzelteile eines Flaschenkastens separat hergestellt werden, müssen diese anschließend miteinander fest zusammengefügt werden.

Aus EP 1 882 636 A2 ist ein Flaschenkasten bekannt, bei dem an die Seitenwandflächen des eigentlichen Flaschenkastens zwei L-förmige Verkleidungsteile angeschweißt oder angeklebt werden. Dabei müssen nicht nur die Außenschalen mit der Innenkomponente, sondern auch die Außenschalen miteinander zusammengefügt werden. Ferner müssen hierbei die jeweiligen Teile beim Verschweißen oder beim Verkleben zueinander genau positioniert werden. Bei geringen Abweichungen bei der Fertigung oder Montage können hierbei an den Fügestellen scharfe Kanten und Grate entstehen, welche in einem weiteren Fertigungsschritt entfernt werden müssen.

Aus der oben genannten Druckschrift ist ferner eine Lösung bekannt, bei der in eine einstückig ausgebildeten Außenhülle das Innenleben samt Boden eingesetzt und mit dieser verschweißt oder verklebt wird. Hierbei hat sich jedoch gezeigt, dass aufgrund von fertigungstechnischen Abweichungen die Außenabmessungen der Innenkomponente oft nicht exakt den Innenabmessungen der Außenkomponente entsprechen, so dass die Innenkomponente im eingesetzten Zustand entweder ein zu großes seitliches Spiel aufweist oder nur mit Kraft in die Außenkomponente hineingedrückt werden kann, wodurch die Außenkomponente aufgeweitet wird und ausbaucht. Beides führt letztendlich dazu, dass die seitlichen Fügeflächen beim Verschweißen oder Verkleben nicht wie gewünscht in Anlage kommen und deshalb die Innen- und Außenkomponente an manchen Stellen nicht miteinander zusammengefügt sind, was im ständigen Einsatz eines solchen Flaschenkastens dazu führen kann, dass sich die Innenkomponente mit samt den Flaschen aus der Außenhülle löst.

Ferner hat sich gezeigt, dass sich die Innenkomponente nicht exakt an der gewünschten Stelle montieren lässt. Wenn nämlich die Fügeflächen der Innen- und Außenkomponente vor dem Einführen der Innenkomponente plastifiziert werden, kann es dazu kommen, dass die Innenkomponente während des Einführens in die Außenkomponente bereits vor Erreichen der Endposition mit Fügeflächen der Außenkomponente verschweißt oder verklebt. Da sich die beiden Teile nicht mehr voneinander lösen lassen, wird dieser Flaschenkasten unbrauchbar, was zu höheren Ausschussraten führt.

Aus EP 0 607 469 A1 ist ein anderes Verfahren zum Zusammenfügen eines zweiteiligen Behälters bekannt. Hierbei geht die Innenkomponente mit der Außenkomponente über eine Klemm- oder Schnappverbindung eine reib- oder formschlüssige Verbindung ein. Die dafür notwendigen Klemmnasen sind nicht nur aufwendiger herzustellen, sondern können auch leicht abbrechen. Ferner ist die in dieser Druckschrift gezeigte Verbindung lediglich auf den oberen Rand des Behälters begrenzt, weshalb diese Lösung für einen beim Gebrauch wesentlich stärker beanspruchten Flaschenkasten nicht in Frage kommt.

Vor diesem Hintergrund besteht die Aufgabe der vorliegenden Erfindung darin, einen mehrteiligen Flaschenkasten zu schaffen, der einfach und kostengünstig herstellbar ist und dessen Innen- und Außenkomponente sich einfach und unlösbar miteinander verbinden lassen.

Ferner ist es Aufgabe der vorliegenden Erfindung, eine Innenkomponente und eine Außenkomponente bereitzustellen.

Diese Aufgabe wird hinsichtlich des Flaschenkastens durch die Merkmale des Anspruchs 1 gelöst.

Erfindungsgemäß lässt sich eine einstückig ausgebildete innere Komponente in eine einstückig ausgebildete äußere Komponente einführen und an Fügeflächen mit dieser stoffschlüssig verbinden. Dabei liegen Abschnitte von zumindest ausgewählten und einander entsprechenden Fügeflächen, die an Seitenwandungsabschnitten der inneren Komponente und der äußeren Komponente ausgebildet sind, in Einführrichtung der inneren Komponente umso weiter innen, je tiefer sie in Einführrichtung angeordnet sind.

Da erfindungsgemäß die Fügeflächen am unteren Ende der inneren Komponente, welches als erstes in die äußere Komponente eingeführt wird, weiter innen liegen als die Fügeflächen am oberen Ende, d.h. an der Einführöffnung, der äußeren Komponente, kann auf sichere Weise verhindert werden, dass diese die am oberen Ende der äußeren Komponente angeordneten Fügeflächen berühren oder mit diesen in Anlage kommen. Durch das erfindungsgemäße Anordnen der Fügeflächen, dass diese umso weiter innen liegen, je tiefer sie angeordnet sind, kommen die Fügeflächen an den Seitenwandungsabschnitten auch erst miteinander in Anlage, wenn die Innenkomponente vollständig in die Außenkomponente eingeführt ist. Dadurch lässt sich verhindern, dass die Innenkomponente und die Außenkomponente bereits eine stoffschlüssige Verbindung eingehen, bevor die Innenkomponente ihre gewünschte Position erreicht hat.

Dadurch wird ermöglicht, die Fügeflächen der Innen- und Außenkomponente im getrennten Zustand plastifiziert werden können, bevor die Innenkomponente in die Außenkomponente eingeführt wird, anstatt diese in einem komplizierten Verfahren im eingesetzten Zustand miteinander zu verschweißen.

Gleiches gilt für die Lösung, bei der Klebstoff vor dem Einbringen der Innenkomponente auf den Fügeflächen einer oder beider Komponenten aufgebracht wird.

Darüber hinaus ergeben sich alle Vorteile, die bereits in EP 1 882 636 A2 beschrieben sind, insbesondere hinsichtlich der funktionalen Trennung zwischen der Außenkomponente und der Innenkomponente und der Auswahl der jeweils geeigneten Materialeigenschaften.

Insbesondere der modulare Aufbau des Flaschenkastens wird der Tatsache gerecht, dass heutzutage in der Getränkebranche eine hohe Vielfalt an Getränkesorten und Varianten angeboten werden, welche auch sehr regional und zeitlich befristet im Markt erscheinen. Durch die Kombination der Innen- und Außenschale können verschiedene Farben, Formen, z.B. für unterschiedliche Flaschendurchmesser, für eine individuelle Marke oder Sorte zusammengestellt werden, ohne immer in einen kompletten neuen Kasten investieren zu müssen.

Gemäß einem Aspekt der Erfindung sind die ausgewählten und einander entsprechenden Fügeflächen an Seitenwandungsabschnitten der inneren Komponente und der äußeren Komponente in Einführrichtung der inneren Komponente nach innen angestellt.

Dadurch ergeben sich mehrere Vorteile. Da die Fügeflächen in Einführrichtung angestellt sind, zentriert sich nicht nur die innere Komponente von alleine innerhalb der äußeren Komponente, sondern es wird auch sichergestellt, dass auch alle Fügeflächen in flächige Anlage kommen und dadurch eine sichere stoffschlüssige Verbindung hergestellt wird. Dadurch wird zum einen eine höhere Festigkeit der Verbindung beider Komponenten ermöglicht, und zum anderen können auch Abweichungen oder Ungenauigkeiten bei der Fertigung ausgeglichen werden. Ferner lassen sich die beiden Komponenten auf einfache Weise herstellen, da keine zusätzlichen form- oder kraftschlüssigen Verbindungselemente vorgesehen werden müssen. Die geneigten Fügeflächen definieren auch die axiale Position der Innenkomponente in der Außenkomponente, so dass keine weiteren zusätzlichen Anlageflächen an der Innenund/oder Außenkomponente vorgesehen werden müssen. Insbesondere bei umlaufend angeordneten Fügeflächen wird die innere Schale bzw. Innenkomponente mittig zentriert. Darüber hinaus kann der Flaschenkasten aus lediglich zwei Komponenten zusammengefügt werden, was die Anzahl der notwendigen Teile auf ein Minimum reduziert und die Montage, insbesondere das Zusammenfügen der Komponenten, wesentlich vereinfacht.

Da die Fügeflächen geneigt sind, kommen diese auch erst miteinander in Anlage, wenn die Innenkomponente vollständig in die Außenkomponente eingeführt ist.

Der Anstellwinkel der Fügeflächen liegt vorzugsweise in einem Winkelbereich von 3 bis 15°. Besonders vorteilhaft hat sich ein Anstellwinkel von ca. 5° erwiesen. Der Nachteil von geneigten Fügeflächen liegt darin, dass sich die seitlichen Abmessungen der Innenkomponente, der Außenkomponente und/oder des Flaschenkastens insgesamt etwas erhöhen können. Wenn der Anstellwinkel in dem oben genannten Winkelbereich liegt, kann der seitliche Platzbedarf auf ein Minimum begrenzt werden.

Gemäß einem weiteren Aspekt der Erfindung sind die Seitenwandungsabschnitte der inneren Komponente und der äußeren Komponente stufenförmig ausgebildet und die ausgewählten Fügeflächen auf unterschiedlichen Stufen ausgebildet, wobei die Stufen umso weiter innen liegen, je tiefer sie angeordnet sind.

Diese erfindungsgemäße Anordnung der Fügeflächen hat mehrere Vorteile. Durch die Stufung wird ebenfalls erreicht, dass die jeweiligen Fügeflächenpaarungen erst miteinander in Anlage kommen, wenn die Innenkomponente vollständig in die Außenkomponente eingeführt ist, da die am unteren Ende der Innenkomponenten ausgebildeten Fügeflächen in Querrichtung weiter innen liegen als die Fügeflächen am oberen Ende der Außenkomponente. Dadurch wird sichergestellt, dass auch alle Fügeflächen in flächige Anlage kommen und eine sichere stoffschlüssige Verbindung hergestellt wird.

Wenn die Fügeflächen auf den Stufen ausgebildet sind, die nicht in Einführrichtung, sondern vorzugsweise quer dazu verlaufen, hat man einen wesentlich höheren Spielraum bei Abweichungen oder Ungenauigkeiten bei der Fertigung. Abweichungen, welche bei vertikalen Fügeflächen zu einem Kontaktverlust führen würden, können durch die auf den Stufen angeordneten Fügeflächen sehr leicht ausgeglichen werden.

Durch die Stufung wird ferner erreicht, dass Fügeflächen auf unterschiedlichen Höhen bzw. Tiefen vorgesehen sind. Durch eine Vielzahl solcher Stufen kann erreicht werden, dass eine feste Verbindung zwischen Seitenwandabschnitten der Innen- und Außenkomponente ermöglicht wird, auch wenn die vertikalen Abschnitte der stufenförmigen Seitenwandabschnitte keine Fügeflächen aufweisen und dort keine stoffschlüssige Verbindung zwischen Innen- und Außenkomponente vorliegt.

Die gestuften Fügeflächen definieren auch die axiale Position der Innenkomponente in der Außenkomponente, so dass keine weiteren zusätzlichen Anlageflächen an der Innen- und/oder Außenkomponente vorgesehen werden müssen.

Gemäß einem weiteren Anspekt der vorliegenden Erfindung können sowohl nach innen geneigte Fügeflächen als auch gestufte Fügeflächen vorgesehen sein. Insbesondere können sich nach innen geneigte Fügeflächen und gestufte Fügeflächen einander abwechseln.

Vorzugsweise kann die Seitenwandung doppelwandig ausgebildet sein, d.h. sowohl die Innenkomponente als auch die Außenkomponente weisen eine Außenwandung auf. Durch diese Doppelwandigkeit erreicht man eine hohe Flexibilität für die Anbringung der erfindungsgemäßen Fügeflächen. Darüber hinaus erhöht sich bei einem doppelwandigen Flaschenkasten dessen Stabilität bei gleichzeitig geringem Materialverbrauch. Die Doppelwandigkeit hat nicht nur Stabilitätsvorteile, sondern auch einen höheren Grad an Isolierwirkung, weshalb die Getränkeflaschen im erfindungsgemäßen Flaschenkasten länger kühl gehalten werden.

Besonders vorteilhaft ist es, wenn die Fügeflächen an Stirnflächen von einer Vielzahl in die Einführrichtung verlaufenden Rippen ausgebildet sind, die abschnittsweise an einer Außenseite der inneren Komponente und/oder einer Innenseite der äußeren Komponente ausgebildet sind. Dadurch wird eine funktionale Trennung der Fügeflächen und der Gestaltung der Seitenwandung der Innen- und/oder Außenkomponente erreicht. Somit haben die geneigten bzw. gestuften Fügeflächen keine Auswirkung auf die Gestaltung der Seitenwandung des Flaschenkastens, die somit wie üblich im Wesentlichen senkrecht gestaltet werden kann.

Andererseits wird dadurch auch ermöglicht, eine angestellte Seitenwandung der Innenkomponente mit einer geneigten Rippe an der Außenwandung bzw. umgekehrt zu verbinden. Die Rippen können somit neben der eingangs dargestellten Funktion der sicheren stoffschlüssigen Verbindung auch eine Ausgleichfunktion zwischen der Außenund Innenkomponente bewerkstelligen. Es ist auch möglich, die geneigten Fügeflächen bei einem rechteckigen Flaschenkasten nur an zwei Seitenwandungsabschnitten vorzusehen, da dadurch die Innenkomponente über die geneigten Fügeflächen an der einen Seite an die Seitenwandung auf der gegenüberliegenden Seite an der Außenwandung der Außenkomponente gedrückt wird.

Um zu verhindern, dass sich die seitlichen Abmessungen des Flaschenkastens oder der einzelnen Komponenten erhöhen, können die Fügeflächen an beiden Komponenten so angeordnet sein, dass sie zwischen einer äußeren Reihe von Flaschenstellplätzen der inneren Komponente liegen. Da die Breite und Länge der Innenkomponente im Wesentlichen durch die in den Flaschenstellplätzen aufzunehmenden Flaschen bestimmt wird, können die Räume zwischen zwei äußeren Flaschenplätzen für die geneigten bzw. gestuften Fügeflächen verwendet werden. Dadurch wird erreicht, dass die äußeren Abmessungen der Innenkomponente unverändert bleiben.

Ferner können die innere Komponente und die äußere Komponente jeweils einen Bodenabschnitt aufweisen, an denen weitere Fügeflächen zur stoffschlüssigen Verbindung vorgesehen sind. Dadurch ergibt sich eine noch höhere Festigkeit der Verbindung zwischen Innen- und Außenkomponente.

Um einerseits die Verbindung beider Komponenten zu erhöhen, andererseits den Materialbedarf in Grenzen zu halten, ist es vorteilhaft, an dem Bodenabschnitt einer oder beider Komponenten Rippen vorzusehen. Diese können vorzugsweise in einer Gitterform angeordnet sein. Durch die Gitterform erhöht sich insbesondere die Biegesteifigkeit der jeweiligen Komponente.

Die innere Komponente und die äußere Komponente können an einander gegenüberliegenden Seitenwandabschnitten Durchgriffe aufweisen, an denen umlaufend eine weitere Fügefläche vorgesehen ist. Dadurch wird sichergestellt, dass die Innen- und Außenschale des Flaschenkastens an der Stelle, an der sie mit der Hand genommen werden, nicht auseinanderklaffen und man sich unter Umständen zwischen beiden Schalen einklemmen kann. Da der Durchgriff wegen der Handhabung meist verstärkt und verbreitert ist, bietet es sich auch an, hier Fügeflächen vorzusehen.

Vorzugsweise kann die Innenschale keinen Durchgriff aufweisen. Dies ist insbesondere vorteilhaft, wenn der Flaschenkasten mit einem Deckel zu Isolierzwecken verschlossen werden kann. Dadurch lässt sich eine mit Durchgriffen versehene und für Isolierzwecke eigentlich nicht vorgesehene Außenschale über eine entsprechende Auswahl einer Innenschale ohne Durchgriffe nachträglich abdichten. Die umlaufende Fügefläche am Durchgriff der Außenschalen und an entsprechender Stelle an der Innenschale dichtet das Flaschenkasteninnere ab.

Neben den nach innen angestellten Fügeflächen an den Seitenabschnitten der beiden Komponenten können zusätzlich parallel zur Einführrichtung verlaufende Rippen vorgesehen sein, die gestuft und zueinander komplementär ausgebildet sind. Diese gestuften Rippen können als Anschlagsflächen dienen, um zu verhindern, dass die Innenkomponente zu weit in die Außenkomponente hineingedrückt wird und sich dadurch die Außenkomponente aufweitet und unter Umständen sich an bestimmten Abschnitten die Fügeflächen wieder lösen. Diese Lösung ist insbesondere in einer Konfiguration vorteilhaft, bei der die Bodenabschnitte der beiden Komponenten nicht in Anlage kommen bzw. eine der Komponenten keinen Bodenabschnitt aufweist.

Vorteilhafterweise kann die innere Komponente auf der in Einführrichtung abgewandten Seite auskragen und an einer umlaufenden Kragenfläche mit einer Stirnfläche der äußeren Komponente stoffschlüssig verbindbar sein. Wenn die Innenkomponente so nach außen gezogen ist, kann eine scharfe Innenkante vermieden werden. Ferner kann dieser Abschnitt auch als axiale Anschlagfläche beim Zusammenfügen beider Komponenten verwendet werden.

Zusätzlich zu den Durchgriffen an den Seitenwandungen oder anstelle von diesen kann zwischen zwei gegenüberliegenden Seitenwandungsabschnitten, bei einem rechteckigen Querschnitt zwischen den längeren Seitenwandungsabschnitten, der inneren Komponente eine als Griff dienende Querstrebe ausgebildet sein. Diese kann einstückig und beim Spritzgießen der inneren Komponente gleich mit ausgebildet werden. Diese Strebe kann als Tragegriff verwendet werden. Ferner dient sie auch zur Versteifung der Innenkomponente und des Flaschenkastens insgesamt. Vorzugsweise befindet sich die Strebe an einem oberen Endabschnitt der Innenkomponente und kann dadurch verhindern, dass die Seitenwandabschnitte, insbesondere die langen Seitenwandabschnitte, nach innen gedrückt werden. Ferner kann diese Querstrebe Stöße von außen aufnehmen. Durch das Vorsehen der Strebe ist es möglich, die Seitenwandabschnitte schlanker und materialsparender zu gestalten.

Hinsichtlich der inneren Komponente wird die Aufgabe durch die Merkmale des Anspruchs 10 gelöst.

Eine erfindungsgemäße innere Komponente eignet sich zum Einführen in und zum stoffschlüssigen Verbinden mit einer äußeren Komponente eines modularen Flaschenkastens, ist einstückig aus einem Kunststoff ausgebildet und weist an ihrer Außenseite zumindest abschnittsweise Fügeflächen auf, von denen ausgewählte Fügeflächen in Einführrichtung der inneren Komponente umso weiter innen liegen, je weiter vorne sie in Einführrichtung angeordnet sind.

Vorzugsweise sind die ausgewählten Fügeflächen in Einführrichtung (R) nach innen geneigt, oder auf unterschiedlichen Stufen an der Außenseite ausgebildet.

Hinsichtlich der äußeren Komponente wird die Aufgabe durch die Merkmale des Anspruchs 11 gelöst.

Eine erfindungsgemäße äußere Komponente eignet sich zur Aufnahme und zum stoffschlüssigen Verbinden mit einer inneren Komponente eines modularen Flaschenkastens und ist einstückig aus einem Kunststoff ausgebildet und weist eine umlaufende Seitenwandung auf, an deren Innenseite zumindest abschnittsweise Fügeflächen vorgesehen sind, von welchen ausgewählte Fügeflächen in Einführrichtung der inneren Komponente umso weiter innen liegen, je tiefer sie in Einführrichtung angeordnet sind.

Vorzugsweise sind die ausgewählten Fügeflächen in Einführrichtung (R) nach innen geneigt, oder auf unterschiedlichen Stufen an der Innenseite ausgebildet.

Aufgrund der Neigung der Fügeflächen bzw. Stufung der inneren bzw. äußeren Komponente eignen sich diese zum stoffschlüssigen Verbinden mit der jeweils anderen Komponente mit allen Vorteilen, die in Bezug auf den Flaschenkasten insgesamt beschrieben worden sind.

Alle Merkmale der einzelnen Komponenten, die in Bezug auf den Flaschenkasten insgesamt beschrieben worden sind, werden separat auch als Erfindung in Bezug auf die jeweiligen Einzelkomponenten als solche gesehen.

Ein weiterer Aspekt der Erfindung betrifft eine Vorrichtung für das Zusammenfügen der beiden Komponenten. Eine solche erfindungsgemäße Vorrichtung, die sich zum Plastifizieren von Fügeflächen der inneren Komponente und/oder äußeren Komponente eines Flaschenkastens aus Kunststoff eignet, weist zu den Fügeflächen der Komponenten komplementär ausgebildete Heizelemente auf, die mit den zu plastifizierenden Fügeflächen der Komponente in Anlage bringbar sind. Da die Heizelemente komplementär zu den Fügeflächen ausgebildet sind, d.h. in Bezug auf die Fügeflächen einen Konturspiegel bilden, sind diese ebenfalls geneigt, so dass die Heizelemente für die Fügeflächen der Innenkomponente in etwa den Verlauf und die Abmessungen der Fügeflächen der äußeren Komponente aufweisen und umgekehrt. Dadurch lassen sich die Komponenten im noch voneinander getrennten Zustand an den Fügeflächen plastifizieren, um anschließend miteinander verbunden zu werden.

Vorzugsweise kann anstelle von zwei getrennten Vorrichtungen eine Vorrichtung verwendet, die zum einen einen Abschnitt zur Aufnahme der inneren Komponenten und zum Plastifizieren der Fügeflächen der inneren Komponente und zum anderen einen Abschnitt zum Einbringen in die äußere Komponente und zum Plastifizieren der Fügeflächen der äußeren Komponente aufweist. Besonders bevorzugt sind die Heizelemente der beiden Abschnitte voneinander unabhängig ansteuerbar.

Ein weiterer Aspekt der Erfindung betrifft einen Behälter aus Kunststoff zur Lagerung und zum Transport von Gegenständen mit einem Boden und einer im Wesentlichen senkrecht um diesen herum ausgebildeten Seitenwandung, wobei eine einstückig ausgebildete innere Komponente in eine einstückig ausgebildete äußere Komponente einführbar und an Fügeflächen mit dieser stoffschlüssig verbindbar ist. Dabei sind Abschnitte von zumindest ausgewählten und einander entsprechenden Fügeflächen, die an Seitenwandungsabschnitten der inneren Komponente und der äußeren Komponente ausgebildet, in Einführrichtung der inneren Komponente umso weiter innen liegen, je tiefer sie angeordnet sind.

Vorzugsweise weist der Behälter ein oder mehrere Merkmale auf, die in Bezug auf den Flaschenkasten beschrieben worden sind.

### Kurze Beschreibung der Zeichnungen

Die vorliegende Erfindung wird anhand von beigefügten Zeichnungen näher dargestellt. Es zeigen:
Fig. 1 einen zweiteiligen Flaschenkasten gemäß einer ersten Ausführungsform vor dem Zusammenfügen der Komponenten;
Fig. 2A eine perspektivische Ansicht einer äußeren Komponente des Flaschenkastens gemäß der ersten Ausführungsform;
Fig. 2B eine perspektivische Teilansicht der Fig. 2A;
Fig. 3 eine innere Komponente des Flaschenkastens gemäß der ersten Ausführungsform;
Fig. 4 eine perspektivische Ansicht des zusammengefügten Flaschenkastens gemäß der ersten Ausführungsform;
Fign. 5A und 5B eine perspektivische Ansicht bzw. perspektivische Schnittansicht einer Schweißvorrichtung sowie der inneren Komponente und der äußeren Komponente gemäß der ersten Ausführungsform; und
Fign. 6A, 6B und 6C eine Teilquerschnittsansicht und eine perspektivische Teilschnittansicht einer Verbindung zwischen einer inneren Komponente und einer äußeren Komponente gemäß einer zweiten Ausführungsform sowie eine perspektivische Teilschnittansicht einer Verbindungsrippe der äußeren Komponente.

### Ausführliche Beschreibung einer bevorzugten Ausführungsform

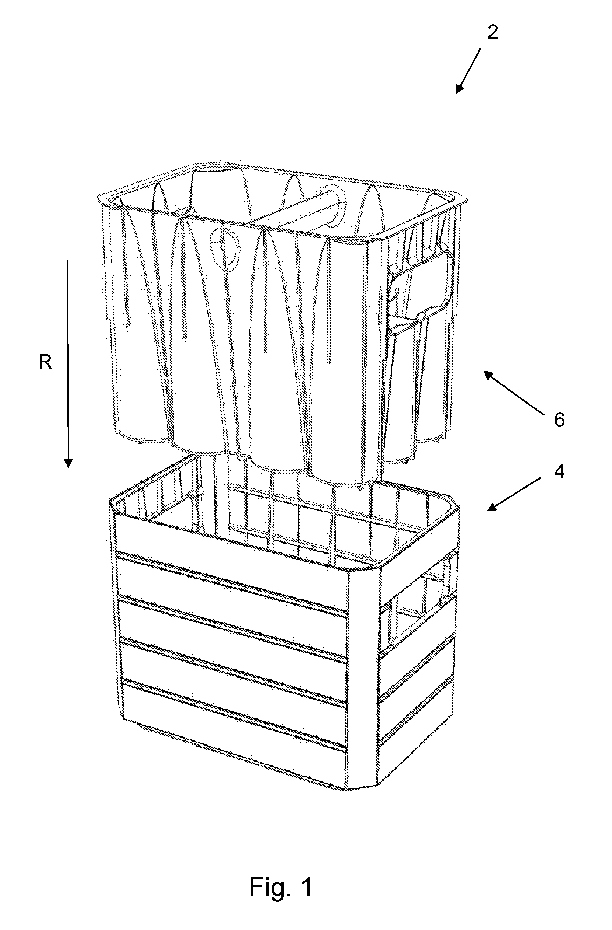

Die Fig. 1 zeigt einen Flaschenkasten 2 bestehend aus einer äußeren Komponente 4 und einer inneren Komponente 6. Die innere Komponente 6 ist in Pfeilrichtung R von oben in die äußere Komponente 4 einführbar.

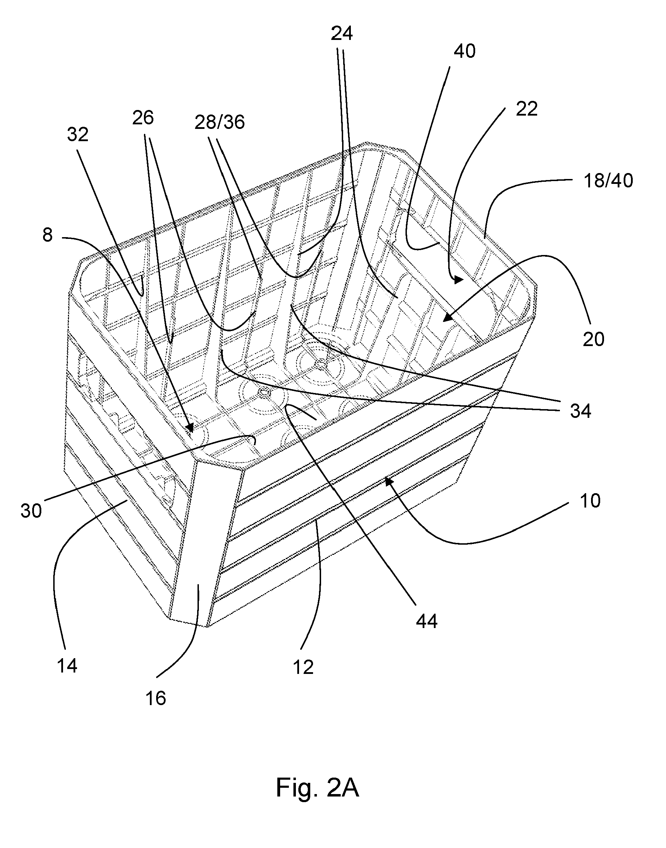

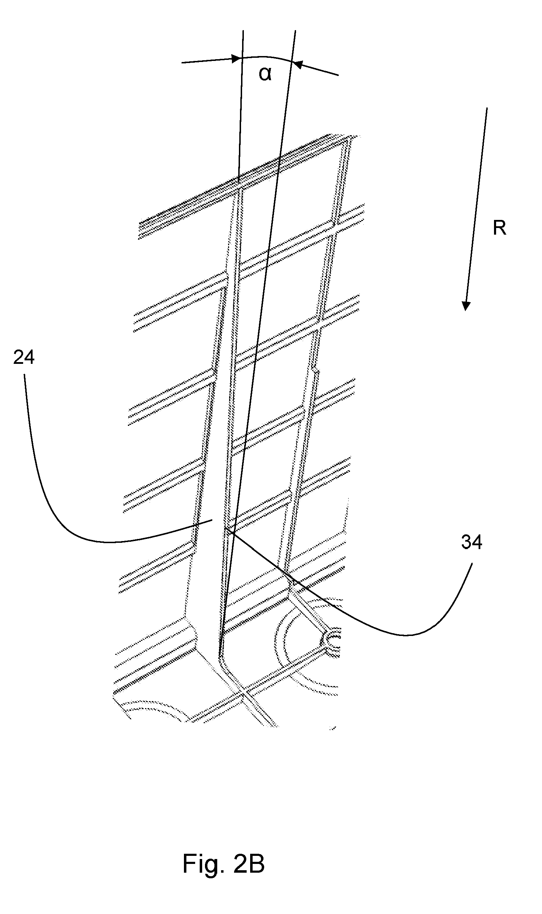

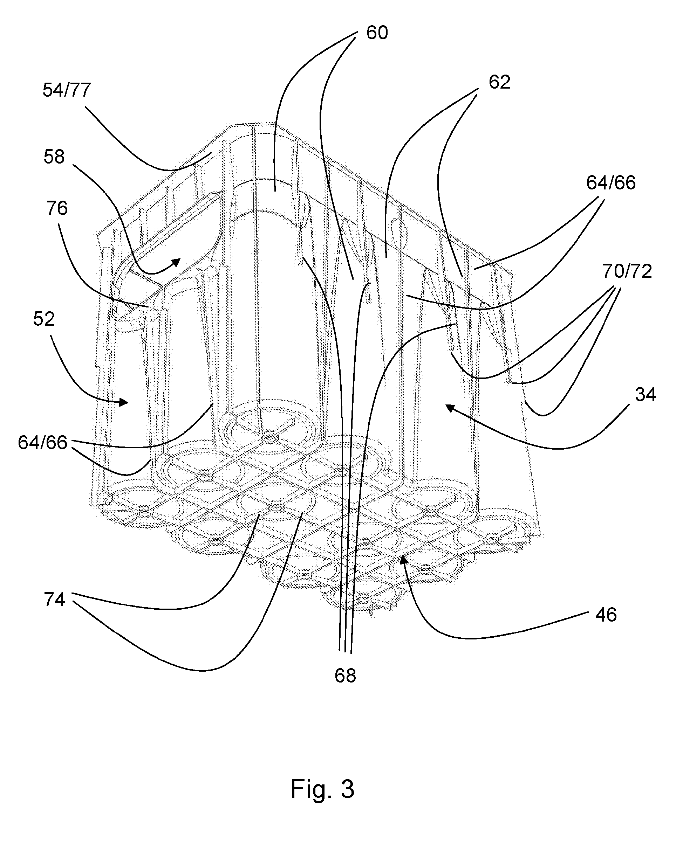

Beide Komponenten 4, 6 werden im Detail unter Bezugnahme auf die Fign. 2 und 3 beschrieben. Fig. 2A zeigt eine perspektivische Draufsicht der äußeren Komponente 4, welche die Außenhülle des Flaschenkastens 2 darstellt. Die äußere Komponente 4 besteht aus einem thermoplastischen Kunststoff und wird einstückig in einem Spritzgießverfahren hergestellt. Sie hat einen im Wesentlichen rechteckigen Querschnitt mit einem Boden 8 und eine im Wesentlichen senkrecht um diesen herum ausgebildete Seitenwandung 10 mit zwei längeren Seitenwänden 12, zwei kürzeren Seitenwänden 14 und abgeschrägten Eckkanten 16. Ein oberer Rand 18 der Seitenwandung 10 begrenzt eine Öffnung 20, über welche die innere Komponente 6 in die äußere Komponente 4 einführbar ist. Ferner weisen die kürzeren Seitenwände Durchgriffe 22 auf, die sich in Querrichtung mittig und in Höhenrichtung näher zur Öffnung 20 als zum Boden 8 befinden. An einer Innenseite der Seitenwände 12, 14 ist eine Vielzahl von Rippen 24 vorgesehen, welche sich in Höhenrichtung der äußeren Komponente 4 bzw. in Einführrichtung der inneren Komponente 6 erstrecken. Während sich die Seitenwände 12, 14 senkrecht zum Boden 8 bzw. parallel zur Einführrichtung der inneren Komponente 6 erstrecken, sind die Rippen 24 in Einführrichtung der inneren Komponente 6, d.h. zum Boden 8 hin, nach innen angestellt bzw. bilden mit dem Boden 8 einen stumpfen Winkel. Der Anstellwinkel α (siehe Fig. 2B) beträgt zu einer senkrecht auf dem Boden 8 stehenden Ebene ca. 5°. Die Rippen 24 erstrecken sich vom oberen Rand 18 bis zum Boden 8. Die Rippen 24 an den kürzeren Seitenwänden 14 sind durch die Durchgriffe 22 unterbrochen.

Vom Boden 8 aus erstrecken sich ferner Rippen 26, welche parallel zu den Seitenwänden 12, 14 bzw. parallel zur Einführrichtung der inneren Komponente 6 verlaufen und etwa bis zur halben Höhe der Seitenwände 12, 14 reichen und dort gegenüber den Seitenwänden 12, 14 eine Stufe 28 definieren.

Der Boden 8 weist ebenfalls Rippen 30 auf, die im Wesentlichen gitterförmig aufgebaut sind und an ihren Randabschnitten in die Rippen 24, 26 der Seitenwände 12, 14 übergehen. Zur Versteifung der Seitenwände 12, 14 verlaufen in regelmäßigen Abständen zwischen dem Boden 8 und dem Rand 18 weitere quer verlaufende Rippen 32.

Beim Verschweißen der inneren Komponente 6 mit der äußeren Komponente 4 bilden Stirnflächen 34 der nach innen angestellten Rippen 24, eine Anschlagfläche 36 an der Stufe 28 der nicht geneigten Rippen 26, Stirnflächen 38 der Bodenrippen 30, eine um die Durchgriffe 22 umlaufende Randfläche 40 sowie die Stirnfläche 42 am Rand 18 der Seitenwandung 10 Fügeflächen.

Wie aus der Fig. 2 ferner ersichtlich ist, befinden sich die geneigten Rippen 24 jeweils mittig zwischen zwei Flaschenreihen, welche durch Ringe 44 am Boden 8 angedeutet sind.

Die Fig. 3 zeigt eine perspektivische Unteransicht der inneren Komponente 6. Die innere Komponente 6 hat eine ähnliche Form wie die äußere Komponente 4, mit einem Boden 46, einer Seitenwandung 48 mit längeren Seitenwänden 50 und kürzeren Seitenwänden 52, einem nach außen auskragenden oberen Rand 54, der eine Öffnung 56 definiert. An den kürzeren Seitenwänden 52 sind Durchgriffe 58 vorgesehen, die im eingesetzten Zustand der inneren Komponente 6 in Größe und Position den Durchgriffen 22 der äußeren Komponente 4 entsprechen.

Die Seitenwände 50, 52 weisen zwischen zylindrischen und im Wesentlichen senkrecht verlaufenden Abschnitten 60, welche die Flaschenstellplätze der äußeren Flaschenreihe darstellen, zum Boden 46 hin nach innen angestellte Seitenwandabschnitte 62 auf. Die Seitenwandabschnitte 62 sind im gleichen Winkel wie die geneigten Rippen 24, d.h. im Winkel von ca. 5°, angestellt. In der Mitte der geneigten Seitenwandabschnitte 62 bzw. in der Mitte zwischen zwei Flaschenstellplätzen 60 ist jeweils eine parallel zu dem geneigten Seitenwandabschnitt 62 bzw. um 5° bezüglich der Einführrichtung R geneigte Rippe 64 vorgesehen, deren Stirnfläche 66 mit der Stirnfläche 34 der geneigten Rippe 24 der äußeren Komponente in Anlage kommt, wenn die innere Komponente 6 in die äußere Komponente 4 eingeführt ist.

Vom oberen Rand 54 erstreckt sich außen am zylindrischen Wandabschnitt 60 bis etwa zur Hälfte der Seitenwandung 48 eine Rippe 68, welche am Ende eine Stufe 70 mit einer Anlagefläche 72 aufweist, welche im eingesetzten Zustand der inneren Komponente 6 mit der Anlagefläche 36 der Rippe 26 der äußeren Komponente 4 in Anlage kommt.

Der Boden 46 weist außen ebenfalls gitterförmig angeordnete Bodenrippen 74 auf, welche in Verlauf und Position den Bodenrippen 30 der äußeren Komponente 4 und im Übrigen der Anordnung der Flaschenstellplätze entsprechen.

Die Rippen 64 und 68 sind durch die Durchgriffe 58 unterbrochen, die ihrerseits eine umlaufende Randfläche 76 aufweisen, die im eingesetzten Zustand der inneren Komponente 6 mit der Randfläche 40 der Durchgriffe 22 der äußeren Komponente 4 in Anlage kommen.

Ferner weist der seitlich auskragende Rand 54 an seiner Unterseite eine Randfläche 77 auf, die in Anlage mit der Stirnfläche 42 der Seitenwandung 10 der äußeren Komponente 4 bringbar und mit dieser verbindbar ist.

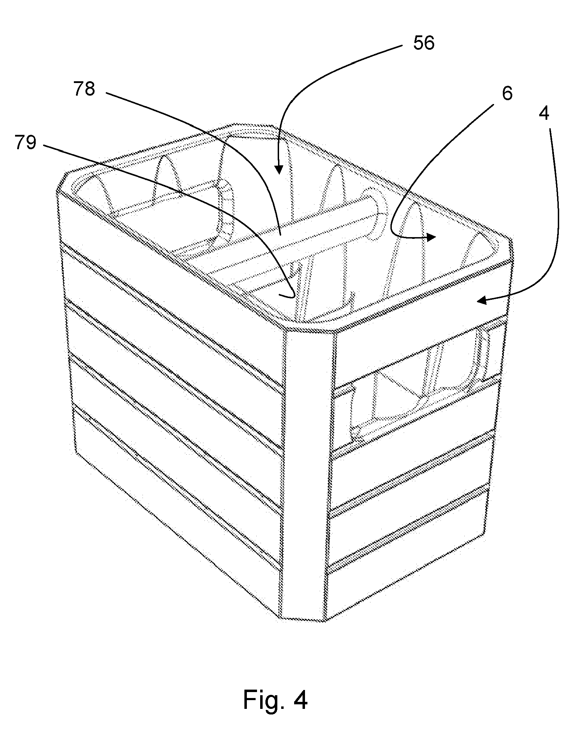

Fig. 4 zeigt den Flaschenkasten 2 mit den zusammengefügten Komponenten 4 und 6. Aus der Fig. 4 ist ferner ersichtlich, dass zwischen oberen Abschnitten der längeren Seitenwände 50 der inneren Komponente 6 mittig eine rundliche Querstrebe 78 verläuft, die einstückig mit der inneren Komponente 6 ausgebildet ist.

Unterhalb der Querstrebe 78 ist ein Fachwerk 79 ausgebildet, welches die Flaschenstellplätze definiert, worin die Flaschen im Flaschenkasten 2 aufgenommen werden, wobei unmittelbar unterhalb der Querstrebe 78 selbstverständlich kein Flaschenstellplatz vorgesehen ist. Wie auch aus der Fig. 3 ersichtlich ist, sind die Flaschenstellplätze in der Mitte etwas weiter voneinander beabstandet als in den Randabschnitten.

Der in der Fig. 4 gezeigte Flaschenkasten 2 ist somit mit doppeltem Boden und doppelwandig ausgeführt, wobei diese lediglich über die Rippen 24, 26, 30, 64, 68, 74 in Kontakt stehen und dazwischen Hohlräume ausbilden. Dadurch ergibt sich bei minimalem Materialbedarf ein äußerst stabiler Flaschenkasten 2.

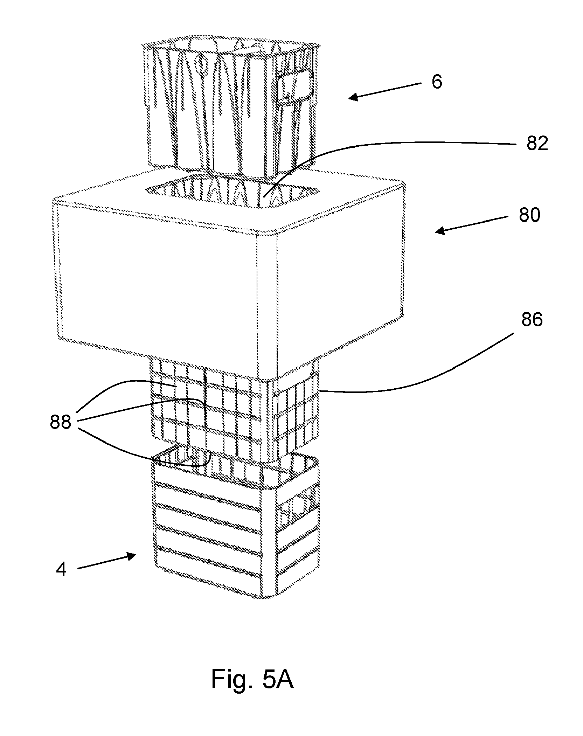

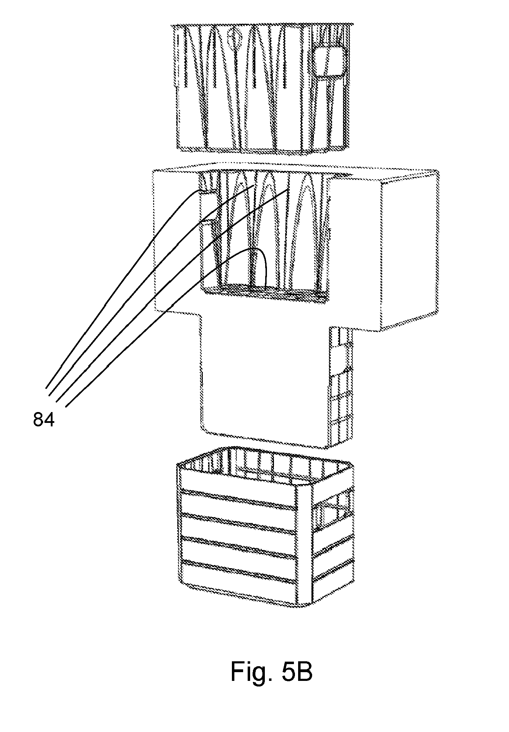

Die Fign. 5A und 5B zeigen eine Schweißvorrichtung 80 in einer perspektivischen Ansicht bzw. einer Querschnittsansicht mit jeweils einer dazu beabstandeten äußeren Komponente 4 und inneren Komponente 6. Die Schweißvorrichtung 80 weist einen Aufnahmeabschnitt 82 auf, der im Wesentlichen der Kontur der äußeren Komponente 4 entspricht und in welche die innere Komponente 6 eingesetzt werden kann. Dieser Aufnahmeabschnitt 82 weist eine Vielzahl an Heizelementen 84 auf, die komplementär zu allen Fügeflächen der inneren Komponenten 6 ausgebildet sind. Wenn sich die innere Komponente 6 in dem Aufnahmeabschnitt 82 befindet und die Heizelemente 84 aufgeheizt werden, werden die Fügeflächen der inneren Komponente 6 plastifiziert.

Die Schweißvorrichtung 80 weist ferner einen Einführabschnitt 86 auf, der im Wesentlichen der Außenoberfläche der inneren Komponente 6 entspricht und in die äußere Komponente 4 einführbar ist bzw. über welchen die äußere Komponente 4 geführt werden kann. Dieser Einführabschnitt 86 weist komplementär zu den Fügeflächen der äußeren Komponente 4 ausgebildete Heizelemente 88 auf, mit welchen sich die Fügeflächen der äußeren Komponente plastifizieren lassen. Wenn die Fügeflächen beider Komponenten 4 und 6 plastifiziert sind, kann die innere Komponente 4 mit Hilfe der als Tragegriff dienenden Querstrebe 78 aus dem Aufnahmeabschnitt 82 entnommen werden und in die innere Komponente 6 eingeführt werden, bis die geneigten Fügefläche 66 der inneren Komponente 6 mit den geneigten Fügeflächen 34 der äußeren Komponente 4 in Anlage kommen. Darüber hinaus dienen die geneigten Fügeflächen zur automatischen Zentrierung der inneren Komponente 6 in der äußeren Komponente 4.

Die Fügeflächen an den Böden 8 bzw. 46, den Stufen 28 bzw. 70 und den oberen Rändern 18 bzw. 54 verhindern, dass die innere Komponente 6 zu weit in die äußere Komponente 4 hineingedrückt wird.

Aufgrund der schrägen Anordnung der Fügeflächen an den Seitenwandungen 10 bzw. 48 kommen diese erst in der gewünschten Fügeposition in Anlage und verbinden sich nicht schon zuvor beim Einfügen der inneren Komponente 6.

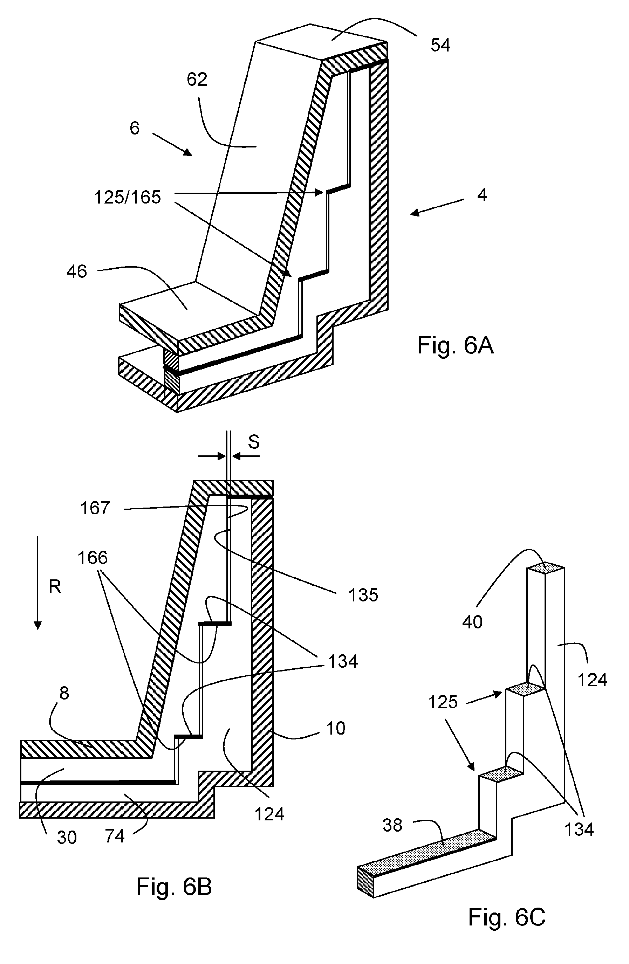

Eine zweite Ausführungsform wird unter Bezugnahme auf die Fign. 6A, 6B und 6C beschrieben, die schematisch eine Teilquerschnittsansicht und eine perspektivische Teilschnittansicht einer Verbindung zwischen einer inneren Komponente und einer äußeren Komponente gemäß einer zweiten Ausführungsform bzw. eine perspektivische Teilschnittansicht einer Verbindungsrippe der äußeren Komponente zeigen.

Die zweite Ausführungsform ist zu der ersten Ausführungsform mit Ausnahme der Gestaltung der Verbindungsrippen zwischen der inneren Komponente und der äußeren identisch, so dass im Folgenden lediglich auf die Unterschiede eingegangen wird.

Dabei werden Merkmale der zweiten Ausführungsform, die Merkmalen der ersten Ausführungsform entsprechen, mit denselben Bezugszeichen beschrieben. Den Merkmalen, die sich von der ersten Ausführungsform unterscheiden wird, die Ziffer "1" vorangestellt.

Fig. 6A zeigt eine Teilquerschnittsansicht durch eine Seitenwandung 10 und einen Boden 8 einer äußeren Komponente 4 sowie durch einen geneigten Seitenwandungsabschnitt 62 und einen Boden 46 einer inneren Komponente 6. An der Außenseite der inneren Komponente 6 springt eine Rippe 164 vor, die stufenförmig ausgebildet ist und eine Vielzahl an Stufen 165 aufweist. An der Innenseite der äußeren Komponente 4 springt eine Rippe 124 vor, die ebenfalls stufenförmig ausgebildet ist und eine Vielzahl an Stufen 125 aufweist, die komplementär zu den Stufen 165 der inneren Komponente 6 ausgebildet sind. Die Stufen 125 und 165 verlaufen im Wesentlichen senkrecht zu einer Einführrichtung R, wobei die Stufen 125 und 165 umso weiter innen liegen (weiter links in Fig. 6B), je tiefer (weiter unten in Fig. 6B) sie angeordnet sind. Die Stufen 125 und 165 weisen Fügeflächen 134 bzw. 166 auf.

Beim Zusammenfügen der beiden Komponenten 4, 6 wird die innere Komponente 6 in Einführrichtung R soweit in die äußere Komponente 4 eingeführt, bis die Fügeflächen 166 der inneren Komponente 6 mit den Fügeflächen 134 der äußeren Komponente 4 in Anlage kommen. Dabei kommen ferner noch obere Ränder 18 bzw. 54 der Seitenwandungen 10, 62 sowie Bodenrippen 30 bzw. 74 in Anlage. Allesamt werden stoffschlüssig, mittels Verschweißung oder Verklebung, verbunden.

Zwischen vertikalen Abschnitten 135, 167 der Rippen 124 bzw. 164 ist ein Toleranzspalt S zum Ausgleichen von Abmessungsungenauigkeiten zwischen innerer und äußere Komponente vorgesehen, der ggf. mit Klebstoff aufgefüllt werden kann.

Fig. 6C zeigt eine Teilansicht der Rippe 124 der äußeren Komponenten 4 mit einer Fügefläche 40 am oberen Rand 18, einer Fügefläche 38 der Bodenrippe 30 sowie zwei ebenfalls horizontal bzw. senkrecht zur Einführrichtung verlaufende Fügeflächen 134 auf den Stufen 125. Diese werden allesamt verschweißt oder verklebt, wie bereits in Bezug auf die erste Ausführungsform beschrieben. Die Rippen 124, 164 der zweiten Ausführungsform sind ebenfalls zwischen zwei äußeren Flaschenstellplätzen angeordnet. Ferner sind die Rippen 124, 164, wie insbesondere aus der Fig. 6B zu entnehmen ist, einstückig mit den Bodenrippen 30, 74 ausgebildet.

Eine Schweißvorrichtung, die sich zum Plastifizieren der Fügeflächen der Komponenten der zweiten Ausführungsform eignet, hat im Gegensatz zu der Schweißvorrichtung 80 der ersten Ausführungsform keine geneigten, sondern entsprechend gestufte Heizelemente an den Seitenwandabschnitten.

Die vorliegende Erfindung wurde zuvor anhand von zwei bevorzugten Ausführungsformen beschrieben. Jedoch ist die vorliegende Erfindung nicht auf diese Ausführungsformen beschränkt, sondern beinhaltet verschiedenste Modifikationen und Abwandlungen innerhalb des Schutzbereichs der angehängten Ansprüche.

Bei der Ausführungsform wurden neben den geneigten Fügeflächen 34, 66 an den Seitenwandungen 10 bzw. 48 weitere Fügeflächen beschrieben, die jedoch auch weggelassen werden können, da über die geneigten Fügeflächen 34, 66 alleine eine feste Verbindung zwischen der inneren und der äußeren Komponente 4, 6 erzielt wird. Darüber hinaus muss der Boden 46 der inneren Komponente 6 nicht unbedingt in Anlage mit dem Boden 8 der äußeren Komponente 4 kommen. Wenn diese voneinander beabstandet sind, sind die in der inneren Komponente 6 aufgenommen Flaschen besser gedämpft, da Stöße von außen auf den Boden 8 der äußeren Komponente 4 nicht unmittelbar auf den Boden 46 der inneren Komponente 6 übertragen werden.

Andererseits ist es denkbar, dass lediglich eine der äußeren und inneren Komponenten 4, 6 einen Bodenabschnitt aufweist. Es ist auch denkbar, dass die innere Komponente 4 keine umlaufende Seitenwandung 48 aufweist, sondern lediglich geneigte Randabschnitte des Flaschenfachwerks der inneren Komponente 6, die mit den entsprechenden Rippen 24 der äußeren Komponente 4 in Anlage bringbar und stoffschlüssig verbindbar sind.

Bei dem Flaschenkasten gemäß der bevorzugten Ausführungsform handelt es sich um einen Flaschenkasten für zwölf Flaschen. Jedoch ist die Erfindung auch auf Kästen mit mehr oder weniger Flaschen anwendbar. Bei der Anordnung der geneigten Rippen 34, 66 ist dabei jedoch zu beachten, dass es vorteilhaft ist, wenn diese jeweils zwischen den Flaschenstellplätzen angeordnet werden. Deshalb sollten je nach Anzahl der Flaschenstellplätze mehr oder weniger solcher Rippen an den Seitenwänden angeordnet werden.

Ferner müssen sich die schrägen Rippen an den Seitenwänden nicht über deren gesamte Länge erstrecken, sondern können abschnittsweise und auch mit Unterbrechungen vorgesehen sein.

Die äußere Komponente 4 und/oder die innere Komponente 6 können ihrerseits wiederum ein Mehrkomponentenspritzgussteil sein.

Bei der beschriebenen Schweißvorrichtung handelt es sich um eine integrierte Vorrichtung, die in der Lage ist, sowohl die Fügeflächen der inneren Komponente 6 als auch die der äußeren Komponente 4 zu plastifizieren. Selbstverständlich können die Komponenten 4, 6 auch als getrennte Vorrichtungen ausgebildet sein. Außerdem reicht es, wenn die jeweiligen Abschnitte nicht die gesamte Außenkontur der jeweiligen Innenkomponente widerspiegeln, wie in den Fign. 5A und 5B dargestellt, sondern lediglich die komplementär ausgebildeten Heizelemente aufweisen.

Ferner müssen die Fügeflächen der beiden Komponenten 4 und 6 nicht miteinander verschweißt werden, sondern können mittels eines Klebstoffs, der auf die entsprechenden Fügeflächen aufgebracht wird, miteinander verklebt werden. Wenn die beiden Komponenten miteinander verklebt werden, muss auch kein schweiß- bzw. plastifizierfähiger Kunststoff verwendet werden, sondern je nach Anwendungsfall andere Werkstoffe verwendet werden. Alle oben in Bezug auf das Schweißverfahren beschriebenen Vorteile gelten ebenfalls für eine Klebeverbindung zwischen der inneren und äußeren Komponente 4, 6.

Schließlich ist die Erfindung nicht nur auf Flaschenkästen, sondern auf beliebige mehrteilige, insbesondere zweiteilige Behälter anwendbar.

## Patentansprüche

1. Flaschenkasten (2) aus Kunststoff zur Lagerung und zum Transport von Flaschen, mit einem Boden (8, 46) und einer im Wesentlichen senkrecht um diesen herum ausgebildeten Seitenwandung (10, 48), wobei eine einstückig ausgebildete innere Komponente (6) in eine einstückig ausgebildete äußere Komponente (4) einführbar und an Fügeflächen (34, 36, 38, 40, 42, 66, 72, 76, 77; 134, 166) mit dieser stoffschlüssig verbindbar ist,
**dadurch gekennzeichnet, dass**
Abschnitte von zumindest ausgewählten und einander entsprechenden Fügeflächen (34, 66; 134, 166), die an Seitenwandungsabschnitten (12, 14, 50, 52) der inneren Komponente (6) und der äußeren Komponente (4) ausgebildet sind, in Einführrichtung (R) der inneren Komponente (6) umso weiter innen liegen, je tiefer sie angeordnet sind.

2. Flaschenkasten (2) nach Anspruch 1, **dadurch gekennzeichnet, dass**
die ausgewählten Fügeflächen (34, 66) in einem Winkelbereich von 3° bis 15°, insbesondere um 5°, nach innen angestellt sind.

3. Flaschenkasten (2) nach Anspruch 1, **dadurch gekennzeichnet, dass**
die Seitenwandungsabschnitte (12, 14, 50, 52) der inneren Komponente (6) und der äußeren Komponente (4) stufenförmig ausgebildet sind und die Fügeflächen (134, 166) auf unterschiedlichen Stufen (125, 165) ausgebildet sind, wobei die Stufen (125, 165) in Einführrichtung (R) der inneren Komponente (6) umso weiter innen liegen, je tiefer sie angeordnet sind.

4. Flaschenkasten (2) nach einem der Ansprüche 1 bis 3, **dadurch gekennzeichnet, dass**
die ausgewählten Fügeflächen (34, 66) an Stirnflächen (34, 66; 134, 166) von einer Vielzahl in die Einführrichtung (R) verlaufenden Rippen (24, 64; 124, 164) ausgebildet sind, die anschnittsweise an einer Außenseite der Seitenwandung (48) der inneren Komponente (6) und/oder einer Innenseite der Seitenwandung (10) der äußeren Komponente (4) ausgebildet sind.

5. Flaschenkasten (2) nach einem der Ansprüche 1 bis 4, **dadurch gekennzeichnet, dass**
die innere Komponente (6) eine Vielzahl von Flaschenstellplätzen (60) aufweist, wobei die ausgewählten Fügeflächen (66; 166) zwischen einer äußeren Reihe von Flaschenstellplätzen (60), insbesondere einem Rücksprung (62) zwischen den Flaschenstellplätzen (60), angeordnet sind.

6. Flaschenkasten (2) nach einem der Ansprüche 1 bis 5, **dadurch gekennzeichnet, dass**
die innere Komponente (6) und die äußere Komponente (4) jeweils einen Bodenabschnitt (8, 46) aufweisen, an denen diese an abschnittsweise vorgesehenen weiteren Fügeflächen (38) stoffschlüssig verbunden sind.

7. Flaschenkasten (2) nach einem der Ansprüche 1 bis 6, **dadurch gekennzeichnet, dass**
die innere Komponente (6) und die äußere Komponente (4) zumindest an einem ihrer Seitenwandungsabschnitte (14, 52) einen einander entsprechenden Durchgriff (22, 58) aufweisen und um den Durchgriff (22, 58) herum ein weitere umlaufende Fügefläche (40, 76) aufweisen.

8. Flaschenkasten (2) nach einem der Ansprüche 1 bis 7, **dadurch gekennzeichnet, dass**
an ausgewählten Seitenwandungsabschnitten (12, 14, 50, 52) der inneren und äußeren Komponente (4, 6) in Einführrichtung verlaufende Rippen (26, 68) vorgesehen sind, wobei diese gestuft und zueinander komplementär ausgebildet sind.

9. Flaschenkasten (2) nach einem der Ansprüche 1 bis 8, **dadurch gekennzeichnet, dass**
zwischen zwei gegenüberliegende Seitenwandungsabschnitten (50) der inneren Komponente (6) ein als Griff dienende Querstrebe (78) ausgebildet ist.

10. Innere Komponente (6) zum Einführen in und zum stoffschlüssigen Verbinden mit einer äußeren Komponente (4) eines modularen Flaschenkastens (2), insbesondere nach einem der Ansprüche 1 bis 9, welche einstückig aus einem Kunststoff, insbesondere einem thermoplastischem Kunststoff, ausgebildet ist und an ihrer Außenseite zumindest abschnittsweise Fügeflächen (66, 72, 76; 166) vorgesehen sind, **dadurch gekennzeichnet, dass**
zumindest ausgewählte Fügeflächen (66; 166) an Seitenabschnitten (50, 52) der inneren Komponente (6) in Einführrichtung (R) der inneren Komponente (6) umso weiter innen liegen, je weiter vorne sie in Einführrichtung angeordnet sind, insbesondere in Einführrichtung (R), vorzugsweise in einem Winkelbereich von 3° bis 15°, besonders bevorzugt um 5°, nach innen angestellt sind oder auf unterschiedlichen Stufen an der Innenseite ausgebildet sind.

11. Äußere Komponente (4) zur Aufnahme und zum stoffschlüssigen Verbinden mit einer inneren Komponente (6) eines modularen Flaschenkastens (2), insbesondere nach einem der Ansprüche 1 bis 9, welche einstückig aus einem Kunststoff, insbesondere einem thermoplastischem Kunststoff, ausgebildet ist und an ihrer Innenseite zumindest abschnittsweise Fügeflächen (34, 36, 38, 40, 42; 134) vorgesehen sind, **dadurch gekennzeichnet, dass**
zumindest ausgewählte Fügeflächen (34) an Seitenwandungsabschnitten (12, 14) der äußeren Komponente (4) in Einführrichtung (R) der inneren Komponente (6) umso weiter innen liegen, je weiter vorne sie in Einführrichtung angeordnet sind, insbesondere in Einführrichtung (R) der inneren Komponente (6), vorzugsweise in einem Winkelbereich von 3° bis 15°, besonders bevorzugt um 5°, nach innen angestellt sind oder auf unterschiedlichen Stufen an der Innenseite ausgebildet sind.
